# EUROPÄISCHE PATENTANMELDUNG

(11) **EP 1 006 513 A2**
(43) Veröffentlichungstag der Anmeldung: **07.06.2000**
(21) Anmeldenummer: 99121839.7
(22) Anmeldetag: 04.11.1999
(51) Int. Cl.: G11B 7/00, G11B 7/24

(54) **Digitaler optischer Datenträger in Scheibenformat**

(30) Priorität: 01.12.1998 DE 19855406
(71) Anmelder: Dierks, Dieter, 50299 Pulheim-Stommeln (DE)
(72) Erfinder: Dierks, Dieter, 50299 Pulheim-Stommeln (DE)
(74) Vertreter: Bauer, Wulf, Dr.

(57) **Zusammenfassung**

Die Erfindung bezieht sich auf einen digitalen optischen Datenträger in Scheibenformat mit zwei Scheibenflächen (20, 22), von denen die eine eine Datenaufzeichnung im CD-Format und die andere eine Datenaufzeichnung im DVD-Format trägt.

## Beschreibung

Die Erfindung bezieht sich auf einen digitalen, optisch lesbaren Datenträger in Scheibenformat mit zwei Scheibenflächen.

Derartige digital speichernde, optisch lesbare Datenträger in Scheibenformat sind als sogenannte CDs bekannt, es handelt sich um flache, gelochte Kunststoffscheiben. Sie haben zwei Scheibenflächen, von denen eine Scheibenfläche für die Datenaufzeichnung, die andere für normal lesbare Informationen bestimmt ist. Derartige plattenförmige CDs haben sich erfolgreich durchgesetzt, sie haben die früher eingesetzten Schallplatten, insbesondere die schwarzen Vinylscheiben weitgehend verdrängt.

Es gibt weiterhin sogenannte DVDs (digital versatile disc, digitale vielfältige Disk), bei denen es sich ebenfalls um digitale optische Datenträger in Scheibenformat handelt, die abmessungsgleich sind mit den CDs. Sie haben eine erhöhte Aufnahmekapazität. Vom technischen Grundkonzept sind sie mit der CD vergleichbar. Auch bei ihnen wird per Laserstrahl eine reflektierende Schicht auf Vertiefungen, sogenannte Pits, hin abgetastet. Im Gegensatz zur CD werden bei der DVD kleinere Pits eingesetzt, die radialen Abstände zwischen den Bögen mit Pits sind kleiner, die Abstände auf einem Bogen zwischen den einzelnen Pits sind ebenfalls kleiner. Dadurch wird eine deutlich höhere Kapazität erreicht. Die DVD hat bereits in ihrer kleinsten Ausführung 4,7 GByte, was etwa der siebenfachen Kapazität einer normalen CD entspricht. Die derzeitige DVD-Spezifikation erlaubt Kapazitäten bis 17 GByte, das entspricht etwa neun Stunden Film oder 26 CDs.

Mit Laufwerken für CDs kann man CDs abspielen. Mit Laufwerken für DVDs kann man dagegen sowohl CDs als auch DVDs abspielen, anders ausgedrückt sind diese Laufwerke nach unten hin kompatibel, also abwärtskompatibel. Sie vertragen normalerweise alle CD-Versionen, inklusive wiederbeschreibbarer CDs, zum Beispiel CD-Rs und CD-RWs.Mit CD-Laufwerken kann man keine DVDs abspielen.

Darüberhinaus sind beide Scheibenflächen einer DVD beschrieben bzw. mit Daten versehen. Schon wegen dieser Doppelnutzung der Scheibe wird eine höhere Kapazität erreicht. Der Laser eines DVD-Laufwerks arbeitet normalerweise bei einer deutlich kleineren Wellenlänge, als es bei bisherigen CD-Laufwerken der Fall ist. Die Frequenz von CD-Laufwerken liegt beispielsweise bei 0,78 Mikrometern, die Wellenlänge von Lasern für DVD-Laufwerken liegt dagegen eher am hochenergetischen Ende des sichtbaren Lichtes.

Videos von DVDs abzuspielen funktioniert im allgemeinen nur mit Hilfe eines guten Komprimierverfahrens. Für die Videokomprimierung hat sich das sogenannte MPEG-Verfahren als Standard bei DVD-Videos etabliert. Es ist aber auch möglich, Audiosignale auf DVDs abzuspeichern, das derzeitig benutzte Format ist AC-3. Ebenso wie bei CDs kann man DVDs für die Wiedergabe von Daten einsetzen, man kann also zum Beispiel auf ihnen Computerprogramme permanent speichern.

Trotz ihrer Vorzüge haben DVDs bisher nur im geringen Umfang Einzug in normale Haushalte und bei normalen Anwendern gefunden. Es liegt dies vorallem daran, dass die Preise für die Abspielvorrichtungen noch relativ hoch sind. Weiterhin haben viele Anwender erst vor einiger Zeit vollständig von der alten Schallplatte auf CD umgestellt und zögern mit einer erneuten Umstellung. All dies führt zu einer noch nicht zufriedenstellenden Akzeptanz des Speichermediums DVD.

Hier setzt die Erfindung ein. Sie hat es sich zum Ziel gemacht, ein Speichermedium der eingangs genannten Art zu schaffen, dass auch von Benutzern und Eigentümern herkömmlicher CD-Abspielgeräten eingesetzt werden kann, aber bereits den Schritt in die DVD-Zukunft in sich trägt, also auch zukünftig mit moderneren DVD-Abspielgeräten benutzt werden kann.

Ausgehend von dem digitalen optischen Speicher in Scheibenformat der eingangs genannten Art wird diese Aufgabe dadurch gelöst, dass die eine Scheibenfläche eine Datenaufzeichnung im CD-Format und die andere eine Datenaufzeichnung im DVD-Format trägt.

Erfindungsgemäß verhält sich also der Datenträger wie eine herkömmliche CD, er ist, wie die genormte CD, auf einer Seite mit einer Speicherschicht belegt, die eine Aufzeichnung im CD-Format trägt. Insoweit ist also eine Unterschied zur alten CD nicht gegeben. Für den Benutzer, der nur die eine, nämlich die CD-formatierte Scheibenfläche benutzt oder benutzen möchte, verhält sich die erfindungsgemäße Datenscheibe wie eine normale CD.

Zusätzlich ist aber nun auch noch die andere, bei einer herkömmlichen CD nicht für die Datenaufzeichnung benutzte Scheibenfläche optisch beschrieben. Auf ihr befindet sich eine Datenaufzeichnung im DVD-Format. Mit dieser Scheibenfläche verhält sich der erfindungsgemäße Datenträger also wie eine DVD-Scheibe. Es besteht zur einer normalen DVD-Scheibe lediglich der Unterschied, dass nur eine der beiden mit Daten versehenen Scheibenflächen im DVD-Format beschrieben ist.

Die Herstellungskosten sind durch die zusätzliche Speicherung von Daten auf der zweiten Fläche nicht wesentlich erhöht. Die Materialkosten sind praktisch dieselben wie bei einer normalen CD bzw. DVD.

Für den Benutzer bietet der erfindungsgemäße Datenträger den Vorteil, dass mit einem DVD-Abspielgerät beide Seiten des Datenträgers gelesen werden können. Zwar enthält die CD-kodierte Seite normalerweise deutlich weniger Informationen als die DVD-kodierte Scheibenfläche, es bleibt aber dabei, dass beide Scheibenflächen von einem DVD-Abspielgerät erfaßt und wiedergegeben können.

Der Benutzer hat also den Vorteil, dass er mit seinem herkömmlichen CD-Abspielgerät die erfindungsgemäße Datenscheibe nutzen kann, er dies aber auch dann tun, wenn er sich zusätzlich oder stattdessen ein DVD-Abspielgerät besorgt.

Die Erfindung bezieht sich insbesondere auf fertig beschriebene, fest gespeicherte Datenscheiben, sogenannte ROMs. Sie kann zwar auch für beschreibbare Datenträger Verwendung finden, ihr besonderer Vorzug liegt aber in der erstgenannten Anwendung. Bei dieser nämlich kann maschinell eine große Anzahl von erfindungsgemäßen Datenträgern erstellt werden, indem geeignete Formen für die beiden Scheibenflächen zur Ausbildung der Pits eingesetzt werden. Die industrielle Herstellung ist ansich bekannt, sie ändert sich durch die Erfindung nicht. Auf sie kann daher zurückgegriffen werden.

Man kann die Erfindung auch so verstehen, dass eine herkömmliche CD zusätzlich auf ihrer bisher für die normal lesbare Beschriftung verwendeten passiven Fläche mit einer DVD-lesbaren, beschriebenen Oberfläche versehen wird. Die Erfindung eignet sich insbesondere für Aufnahmen gleicher Art auf den beiden Scheibenflächen der Kunststoffscheibe. So können beispielsweise auf der CD-kodierten Seite eine Vielzahl von Musikstücken einer Gruppe oder eines Komponisten aufgezeichnet sein, in dem Maße, in dem es die Kapazität dieser Seite zuläßt. Auf der anderen, der DVD-kodierten Scheibenfläche wird die dort wesentlich höhere Kapazität genutzt, um nicht nur die selben Audiosignale zu speichern, sondern zugleich auch noch Videosignale zu Verfügung zu stellen, beispielsweise Videosignale über die Gruppe, die die Stücke spielt oder das Orchester, das während der Aufnahme per Video erfaßt wurde. Gerade eine derartige Doppelaufzeichnung eignet sich für die erfindungsgemäßen Datenträger. Für den Nutzer stellt sich beim Wechsel vom CD-Laufwerk zum DVD-Laufwerk der Vorteil ein, dass er bei gleichbleibender Tonqualität nun das zusätzliche Video-Erlebnis hat. Alternativ kann aber auch auf der DVD-Seite mehr an Musik geboten werden, das mehr an Kapazität also genutzt werden, um zusätzliche Stücke aufzuspeichern.

Vorzugsweise enthält also die CD-kodierte Scheibenfläche eine Untermenge der Information, die sich auf der DVD-kodierten Scheibenfläche befindet.

Für den Produzenten derartiger Datenträger ergibt sich die Möglichkeit, dass er mit ein und demselben Produkt unterschiedliche Anwender erfassen kann. So kann beispielsweise der Produzent einer Enzyklopädie auf digitalen Speichermedien seine Datenträger in der erfindungsgemäßen Art herstellen und anbieten, wodurch er sowohl solchen Käufern gerecht wird, die ein CD-Laufwerk haben, als auch solchen, die ein DVD-Laufwerk verfügen. Auch ein Softwarehersteller kann entsprechend verfahren. Die Frage nach dem Format des Datenträgers, wie sie häufig bei käufen, insbesondere Softwarekäufen beachtet werden muss, entfällt damit.

Der Aufbau der Datenplatte bleibt ungeändert. Man kann, wie das bei CDs üblich ist, einen einstückigen Datenträger verwenden. Man kann aber auch, wie dies bei DVDs sich im wesentlichen durchgesetzt hat, zwei oder gar mehrere Scheiben miteinander zusammenkleben zu einem Datenträger mit der Dicke einer fertigen CD bzw. der gleichdicken DVD. Letzteres Verfahren hat den Vorteil, dass das Endprodukt weniger Abweichungen von der idealen Geometrie hat, also im wesentlichen planparalleler ist als eine einstückig hergestellte CD. Die unterschiedlichen Herstellungsverfahren haben aber auf das Prinzip der Erfindung keinen Einfluß, da es erfindungsgemäß darauf ankommt, dass die beiden Scheibenflächen des Datenträgers in unterschiedlichem Format, also einmal im CD-Format, sei es als Audio-CD oder als Daten-CD, und einmal im DVD-Format beschrieben sind.

Um einen an eine normale CD gewöhnten Nutzer den Umgang mit der erfindungsgemäßen Datenscheibe zu vereinfachen, wird vorgeschlagen, dass die DVD-kodierte Fläche optisch lesbare Informationen der CD-Seite trägt. Dies kann in einer bevorzugten Ausbildung dadurch geschehen, dass diese Scheibenfläche mit einer dünnen abziehbaren Folie belegt ist, auf der sich wiederum die bei CDs üblichen Informationen über den Inhalt der Rückseite des Datenträgers, also der CD-kodierten Seite befinden. Nach Abziehen der Folie ist auch die DVD-Seite maschinell lesbar. Es ist aber auch möglich, diese Daten direkt auf die Scheibe aufzudrucken, indem eine Farbe verwendet wird, die für den Menschen zwar lesbar, für den verwendeten Laser aber durchsichtig ist. Schließlich kann sich die optische Information unterhalb der vom Laser erfaßten Schicht, also unterhalb der Pits befinden und durch diese hindurchscheinen. Dabei ist berücksichtigt, dass bei DVDs in unterschiedlichen Tiefen aufgezeichnet werden kann. So ist es derzeit bekannt, mehrere Reflexionsschichten zu verwenden und den Laser auf die jeweilige Schicht zu fokussieren, bis zu acht Schichten auf einer Seite sind schon erreicht.

Weiterhin ist in bevorzugter Ausbildung der Erfindung mindestens eine Scheibenfläche deutlich gekennzeichnet, zum Beispiel mit CD oder DVD. Vorzugsweise sind beide Scheibenflächen entsprechend gekennzeichnet. Diese Kennzeichnung kann sich außerhalb der optisch lesbaren Fläche befinden, sie kann sich aber auch innerhalb dieser befinden. Die Kennzeichnung CD bzw. DVD wird so groß angebracht, dass sie von jedem normalen Benutzer rasch erkannt wird. Auf diese Weise wird verhindert, dass ein CD-Benutzer die Scheibe falsch herum in sein CD-Laufwerk einsetzt, was dazu führen würde, dass er nichts hört bzw. keine Daten erhält. Diese Gefahr ist bei einem Nutzer vom DVD-Laufwerken geringer, dieser kann ja beide Seiten der erfindungsgemäßen Datenscheibe nutzen, auch wenn er die CD-Seite weniger nutzen wird, weil deren Informationsgehalt deutlich geringer ist als der DVD-kodierten Scheibenfläche.

Als besonderes besonders bevorzugt hat sich ein dreischichtiger meschanischer Aufbau der erfindungsgemäßen Datenscheibe gezeigt. Dabei trägt eine obere ringförmige, dünne Scheibe an ihrer Außenfläche die digitale Information im CD-Format. Eine mittlere Scheibe dient lediglich der Wiedergabe von für den Menschen lesbaren Informationen, also auf ihren beiden Seiten sind die jeweiligen Inhalte der Scheibenfläche untergebracht. Auf einer unteren, im wesentlichen mit der oberen bauähnlichen Schicht im Scheibenformat sind auf der Außenseite die digitalen Informationen im DVD-Format aufgezeichnet. Alle drei Schichten werden zusammengeklebt und bilden dann eine CD bzw. DVD üblicher Abmessungen.

Weitere Vorteile und Merkmale der Erfindung ergeben sich aus den übrigen Unteransprüchen sowie der nun folgenden Beschreibung von nicht einschränkend zuverstehenden Ausführungsbeispielen, die unter Bezugnahme auf die Zeichnung näher erläutert werden. In dieser zeigen:
- Fig. 1:: eine Draufsicht auf eine CD-Scheibenfläche eines erfindungsgemäßen Datenträgers,
- Fig. 2:: eine Unteransicht des Datenträgers gemäß Fig. 1, nunmehr mit Blick auf die DVD-kodierte Scheibenfläche und
- Fig. 3:: eine perspektivische Darstellung des Aufbaus einer Datenscheibe aus drei dünnen Einzelscheiben in Form eines Montagebildes, die drei Einzelscheiben werden später zusammengeklebt und bilden dann eine normal dicke Datenscheibe.

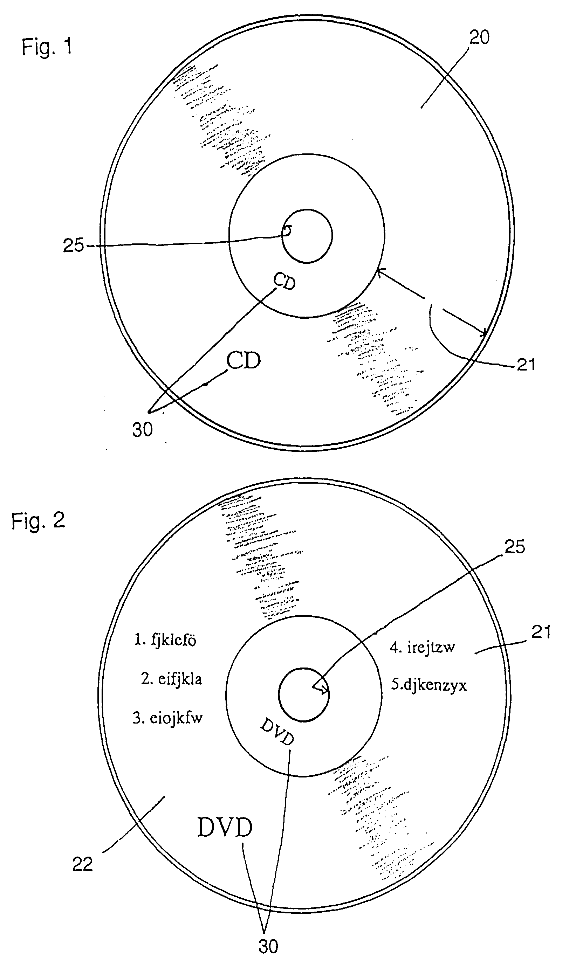

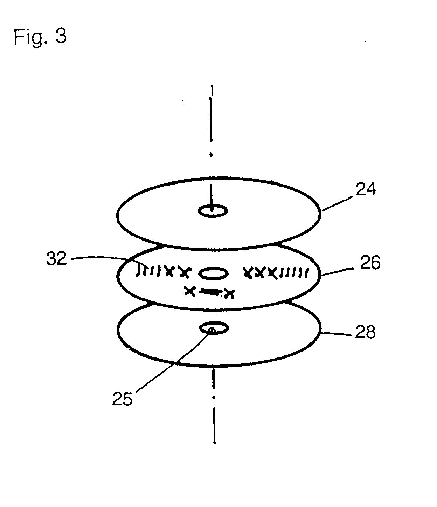

Wie Figur 1 zeigt, ist die CD-kodierte Scheibenfläche 20 grundsätzlich nicht von einer normalen CD zu unterscheiden. Erfindungsgemäß besteht jedenfalls keine Notwendigkeit, diese Scheibenfläche 20 anders auszubilden als dies bei bisher üblichen CDs der Fall ist. Im gezeigten Ausführungsbeispiel ist zusätzlich noch mit einer durchsichtigen Farbe oder (alternativ) unterhalb der optischen Aufzeichnungsschicht - hierzu wird auf Figur 3 verwiesen - ein Hinweis 30 CD angebracht. Dadurch soll dem Nutzer signalisiert werden, dass diese Scheibenfläche 20 die CD-Seite ist. 21 ist die mit Pits beschriebene Speicherfläche, 25 ein zentrales Loch.

Die Unterseite 22, also die dortige Scheibenfläche 22, ist DVD-kodiert. Um sie möglichst ähnlich der entsprechenden Scheibenfläche einer normalen CD zu machen, ist sie mit normal lesbaren Informationen über die auf der Scheibenfläche 20 aufgespeicherten Informationen 23, beispielsweise Musikstücke, beschriftet. Hier kann wieder das Verfahren nach Fig. 3 alternativ eingesetzt werden. Vorzugsweise ist die Scheibenfläche 22 zusätzlich dadurch markiert, dass sie einen Aufdruck DVD trägt, der den Nutzer darauf hinweist, dass dies nun die DVD-Seite ist. Dieser Aufdruck kann so ausgeführt sein, wie dies oben für die Information für die CD beschrieben wurde.

Fig. 3 zeigt drei dünne Scheiben 24, 26, 28, die zusammengeklebt die Dicke einer normalen CD bzw. DVD ergeben. Eine obere Scheibe 24 trägt an ihrer Außenseite die digitale Information einer CD, diese Oberfläche ist also eine Scheibenfläche 20.

Eine mittlere Scheibe 26 dient lediglich als Träger normal lesbarer Informationen, also gedruckter Angaben 32 über den Inhalt usw. Von dieser Scheibe 26 werden beide Seiten bedruckt. Diese beiden Seiten erhalten auch jeweils einen Hinweis auf CD bzw. DVD, damit der Benutzer die richtige Seite, die er jeweils einsetzen will erkennen kann. Die untere Scheibe 28 ist baugleich mit der oberen Scheibe 24. An ihrer Außenfläche ist sie DVD-kodiert. Alternativ kann man auch die Innenseiten der Scheiben 24, 28 bedrucken und die Scheibe 26 nur zur Trennung verwenden.

## Patentansprüche

1. Digitaler optischer Datenträger in Scheibenformat mit zwei Scheibenflächen (20, 22), von denen die eine eine Datenaufzeichnung im CD-Format und die andere eine Datenaufzeichnung im DVD-Format trägt.

2. Datenträger nach Anspruch 1 dadurch gekennzeichnet, dass mindestens eine Scheibenfläche (20, 22) eine Markierung aufweist, die auf das Format, mit dem diese Scheibenfläche kodiert ist, hinweist, zum Beispiel CD oder DVD.

3. Datenträger nach Anspruch 1, dadurch gekennzeichnet, dass die DVD-kodierte Scheibenfläche (22) Informationen über die auf der CD-Scheibenfläche (20) aufgespeicherten Daten enthält.

4. Datenträger nach Anspruch 1, dadurch gekennzeichnet, dass es aus zwei oder mehr als zwei einzelnen, flächengleichen Scheiben (24-28) zusammengesetzt, insbesondere zusammengeklebt ist.

5. Datenträger nach Anspruch 1, dadurch gekennzeichnet, dass die Daten auf den Scheibenflächen (20, 22) permanent abgespeichert sind.

6. Datenträger nach Anspruch 1, dadurch gekennzeichnet, dass sich auf der DVD-Scheibenfläche (22) ein dünner, ablösbarer Film befindet, der normal lesbare Information über die Aufzeichnung auf der CD-Scheibenfläche (20) trägt.

7. Datenträger nach Anspruch 1, dadurch gekennzeichnet, dass der aus drei flächengleichen Scheiben (24, 26, 28) zusammengesetzt ist, von denen vorzugsweise eine mittlere Scheibe (26) als Träger für normal lesbare Informationen dient.
